Europäisches Patentamt

European Patent Office

Office européen des brevets

(19)

(11) Numéro de publication: **0 108 673**
**B1**

(12) **FASCICULE DE BREVET EUROPEEN**

(45) Date de publication du fascicule du brevet:
04.06.86

(21) Numéro de dépôt: **83402055.4**

(22) Date de dépôt: **21.10.83**

(51) Int. Cl.⁴: **B 23 P 19/04**

(54) Procédé et dispositif de mise en place de ressorts en épingle à cheveux sur des plaquettes, notamment pour grilles d'assemblage de combustible.

(30) Priorité: **22.10.82 FR 8217717**

(43) Date de publication de la demande:
**16.05.84 Bulletin 84/20**

(45) Mention de la délivrance du brevet:
**04.06.86 Bulletin 86/23**

(84) Etats contractants désignés:
**BE DE SE**

(56) Documents cités:
**EP - A - 0 022 419**
**FR - A - 2 474 229**
**US - A - 2 629 296**

(73) Titulaire: **SOCIETE COGEMA, FRAMATOME et URANIUM PECHINEY, 2, rue Paul Dautier, F-78140 Velizy Villacoublay (FR)**

(72) Inventeur: **Vere, Bernard, 2, les Chusets Brie et Angonnes, F-38320 Eybens (FR)**
Inventeur: **Mathevon, Paul, Avenue Achille Maucuer, F-84500 Bollene (FR)**
Inventeur: **Decarsin, Michel, 27, Petite Rue de la Doua, F-69100 Villeurbanne (FR)**

(74) Mandataire: **Fort, Jacques et al, CABINET PLASSERAUD 84, rue d'Amsterdam, F-75009 Paris (FR)**

## Description

La présente invention concerne la mise en place de ressorts en épingle à cheveux destinés à supporter les crayons de combustible dans des grilles entretoises d'assemblage de combustible.

Des assemblages combustibles très fréquemment utilisés comportent un faisceau de crayons de combustible (constitués chacun par un empilement de pastilles dans une gaine étanche) maintenus dans une structure. Cette dernière comporte des grilles réparties le long de l'assemblage et constituées par des plaquettes disposées suivant deux directions orthogonales, pour définir des cellules dont la majeure partie au moins est traversée par des crayons. Chacune de ces cellules est munie de moyens s'appuyant sur le crayon qui traverse la cellule pour le supporter.

Ces moyens peuvent être constitués par une partie découpée des plaquettes, constituant des pattes en appui contre les crayons. Mais il est plus avantageux d'utiliser des ressorts rapportés sur les plaquettes, pouvant être en un matériau différent des plaquettes. Une grille de ce dernier type est décrite par exemple dans le document FR-A-2 474 229 auquel on pourra se reporter.

Les ressorts ont en général une forme en épingle à cheveux, à deux branches. En général, on est amené à prévoir dans une même grille plusieurs types de ressort, du fait que la grille présente des bords et que souvent certaines cellules sont occupées par des éléments autres que des crayons, par exemple par des tubes guides. L'un des types comportera fréquemment deux branches identiques, tandis qu'un autre type aura des branches différentes. Ces ressorts sont d'abord insérés, puis solidarisés définitivement des plaquettes par soudage des deux branches l'une sur l'autre en des points bien définis, entre lesquels se trouvent des fenêtres ménagées dans la plaquette de grille.

La mise en place de chaque ressort constitue une opération délicate: il est nécessaire de les localiser de façon précise afin de ne pas les pincer sur les plaquettes lors de l'opération de soudage, et d'éviter toute contamination. Jusqu'ici, le montage des ressorts et leur soudage ont été réalisés de façon manuelle, ce qui constitue une opération longue et pénible, au surplus susceptible de donner lieu à des erreurs lorsque des ressorts de types différents doivent être placés en des zones bien déterminées de la plaquette. On peut penser que l'une des raisons pour lesquelles il n'y a pas eu automatisation de ce processus réside dans les risques d'accrochage des branches du ressort aux nombreuses aspérités de la plaquette lors de l'insertion d'un ressort dont les branches présentent un écartement qui ne peut être exactement défini du fait de leur élasticité.

La présente invention vise à fournir un procédé et un dispositif de mise an place de ressorts répondant mieux que ceux antérieurement connus aux exigences de la pratique, notamment en ce qu'ils permettent une mise en place rapide et sûre.

Dans ce but, l'invention propose notamment un procédé d'insertion de ressorts en épingle à cheveux à deux branches à cheval sur une plaquette munie de fenêtres permettant de souder localement les branches l'une à l'autre, caractérisé en ce qu'on maintient la plaquette dans une position déterminée, en ce qu'on déplace le ressort suivant une orientation proche du plan de la plaquette vers son emplacement d'insertion, perpendiculairement à la longueur de la plaquette, après avoir recouvert au moins la fenêtre de la plaquette la plus éloignée de la zone par laquelle s'effectue l'introduction du ressort à l'aide de masques déplaçables parallèlement au plan de la plaquette afin d'éviter l'engagement intempestif d'une extrémité d'une branche du ressort dans la fenêtre et en ce qu'on répète l'opération après déplacement de la plaquette dans le sens de la longueur d'un ou plusieurs pas déterminés.

Dans un mode de réalisation particulièrement avantageux de l'invention, la séquence de mise en place des ressorts incorpore le soudage électrique des deux branches d'un ressort l'une contre l'autre aussitôt après mise en place de ce ressort et avant déplacement de la plaquette en vue de la mise en place du ressort suivant. On a ainsi la certitude qu'aucun déplacement intempestif du ressort n'a pu se produire entre l'opération d'insertion et l'opération de soudage.

L'invention propose également un dispositif d'insertion de ressorts en épingle à cheveux à deux branches à cheval sur une plaquette munie de fenêtres permettant de souder localement les branches l'une contre l'autre, caractérisé en ce qu'il comporte des moyens pour recevoir une plaquette à la fois et la déplacer dans le sens de la longueur; un couloir de guidage de chaque ressort à son tour, associé à des moyens pour déplacer le ressort le long du couloir vers son emplacement d'insertion, coopérant pour maintenir le ressort dans une orientation proche du plan de la plaquette au cours de son déplacement, et des masques déplaçables parallèlement au plan de la plaquette à partir de la tranche de celle-ci éloignée de la zone par laquelle s'effectue l'introduction permettant de couvrir, des deux côtés de la plaquette, la fenêtre la plus éloignée de la zone par laquelle s'effectue l'introduction afin d'éviter l'engagement intempestif d'une extrémité d'une branche du ressort dans cette fenêtre.

L'invention sera mieux comprise à la lecture de la description qui suit de dispositifs qui en constituent des modes particuliers de réalisation, donnés à titre d'exemples non limitatifs. La description se réfère aux dessins qui l'accompagnent, dans lesquels:

— la figure 1 est une vue en perspective d'un fragment d'une grille d'assemblage combustible dont les ressorts peuvent être insérés par un dispositif suivant l'invention,

— la figure 2 est une vue de détail montrant, en élévation, un fragment d'une plaquette de la grille de la figure 1, munie des ouvertures et des déformations nécessaires pour recevoir les ressorts,

— les figures 3A et 3B sont des vues, respectivement en coupe suivant les lignes AA et BB de la figure 2, montrant respectivement un ressort double (à deux branches actives) et un ressort simple (dont une branche constitue ressort et l'autre constitue butée),

— la figure 4 est un schéma de principe, en élévation et en coupe partielle suivant un plan vertical, montrant un dispositif de montage de ressort double,

— la figure 5 est une vue à grande échelle d'une fraction de la figure 4,

— la figure 6 est une vue schématique en élévation d'un poste de travail comportant un dispositif de montage de ressort simple,

— la figure 7 est une vue en élévation et en coupe partielle montrant le dispositif de montage de la figure 6,

— la figure 8 est une vue de détail à grande échelle d'un fragment de la figure 7, un ressort étant représenté au cours de son insertion.

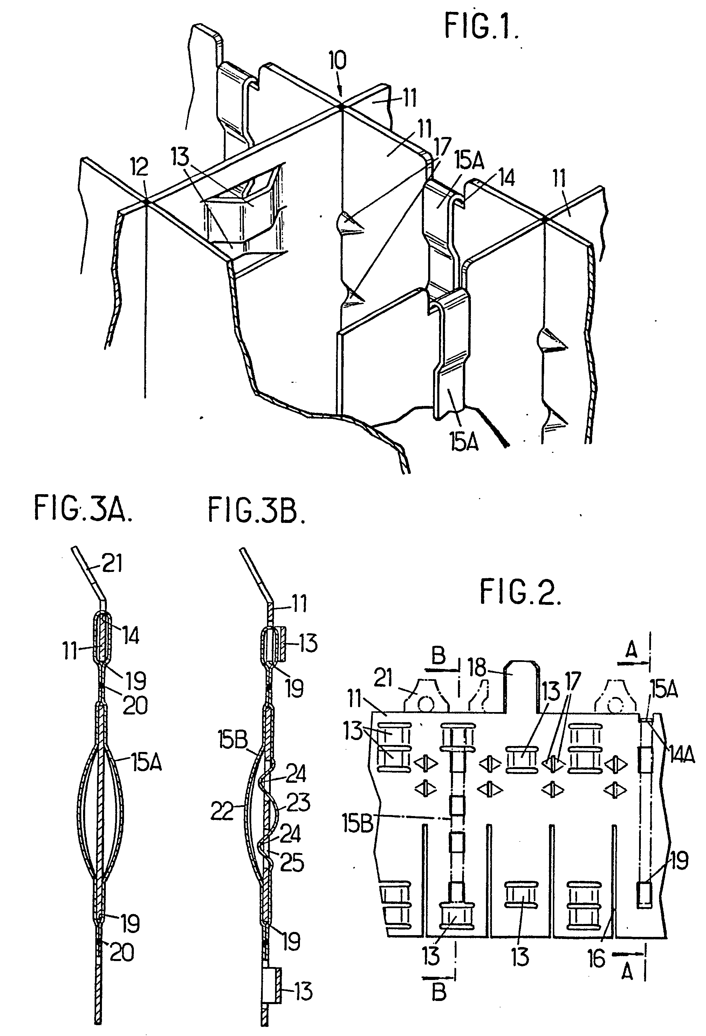

Les dispositifs qui seront décrits à titre d'exemples peuvent être utilisés notamment pour monter les ressorts montrés en figures 3A et 3B sur les plaquettes d'une grille du genre montré en figure 1. Cette grille 10 est constituée par des plaquettes 11, généralement en alliage à base de zirconium dénommé «Zircaloy», assemblées à mi-fer et soudées en leurs points de raccordement 12.

Chacune des plaquettes 11 comporte des bossages 13 d'appui de crayons de combustible (non représentés) et diverses ouvertures coopérant avec les ressorts destinés à appliquer les crayons sur les bossages. Sur la figure 1 apparaissent uniquement des ressorts doubles 15A qui s'insèrent dans des échancrures 14 des plaquettes débouchant sur l'une des tranches.

Sur la plaquette 11 représentée schématiquement en figure 2, ont été indiqués, de façon artificielle, différents types d'ouvertures et de déformations que l'on rencontre dans une grille 10. On voit sur cette figure les fentes 16 destinées à permettre l'assemblage à mi-fer, placées face à des intervalles de guidage délimités par des ergots 17. Une bande médiane verticale de la plaquette 11 qui porte deux bossages 13 dirigés d'un même côté est equipée d'une languette 18 de fixation de la grille sur un tube guide (non représenté) appartenant à l'ossature de l'assemblage. A gauche de cette bande munie de bossages 13 dirigés vers un seul côté de la plaquette est montrée une bande munie d'ouvertures destinées à recevoir un ressort simple 15B dont l'encombrement est indiqué en tirets. A gauche de cette bande en est montrée une autre, munie de bossages 13 faisant saillie des deux côtés de la plaquette, comme indiqué sur un des côtés de la cellule complète visible en figure 1. Une bande identique a été représentée immédiatement à droite de celle qui porte une languette de fixation 18. Enfin, la dernière bande à droite est munie d'une échancrure 14 destinée à recevoir un ressort double 15A. Les ailettes 21 indiquées en traits mixtes et apparaissant sur un des bords de la plaquette sont prévues uniquement sur certaines des plaquettes.

Comme le montre la figure 3A, chacun des ressorts 15A peut être mis en place en glissant ses branches de part et d'autre de la plaquette 11 jusqu'à ce que la boucle supérieure du ressort vienne au contact de la plaquette, au fond de l'échancrure 14. Des fenêtres 19 ménagées dans la plaquette (figures 2 et 3A) permettent de fixer les deux branches de ressort directement l'une sur l'autre à l'aide d'un point de soudure 20.

Le ressort simple 15B montré en figure 3B est de constitution dissymétrique. Sa branche 22 est similaire aux branches du ressort 15A. L'autre branche 23 est dessinée de façon à constituer une rotule délimitée par deux plis 24 susceptibles de venir en contact avec la branche 22 à travers des ouvertures 25 de la plaquette, pour éviter de transmettre les efforts de compression à celle-ci. Comme dans le cas précédent, les deux branches du ressort 15B sont soudées l'une à l'autre à travers des fenêtres 19 sur la grille terminée. Mais la boucle ne vient pas se placer au fond d'une échancrure, mais dans un prolongement de l'ouverture supérieure 19, ménagée par un des bossages 13. Il n'est donc pas possible de passer directement les branches 22 et 23 de part et d'autre de la plaquette.

Cette suppression de l'échancrure, gênante pour ce qui est de l'insertion du ressort, est fréquemment indispensable car l'échancrure affaiblirait de façon excessive la plaquette à un emplacement où elle présente déjà des bossages 13 constitués par des crevés qui ont un rôle important dans le supportage, mais une action défavorable sur la résistance de la plaquette.

On décrira maintenant, successivement, deux dispositifs adaptés à la mise en place des ressorts 15A et 15B, respectivement. Naturellement un seul de ces dispositifs suffirait dans le cas où le mode d'insertion est le même pour tous les ressorts. Et, pour d'autres formes de ressorts ou de plaquettes, il pourrait être nécessaire de modifier ces dispositifs.

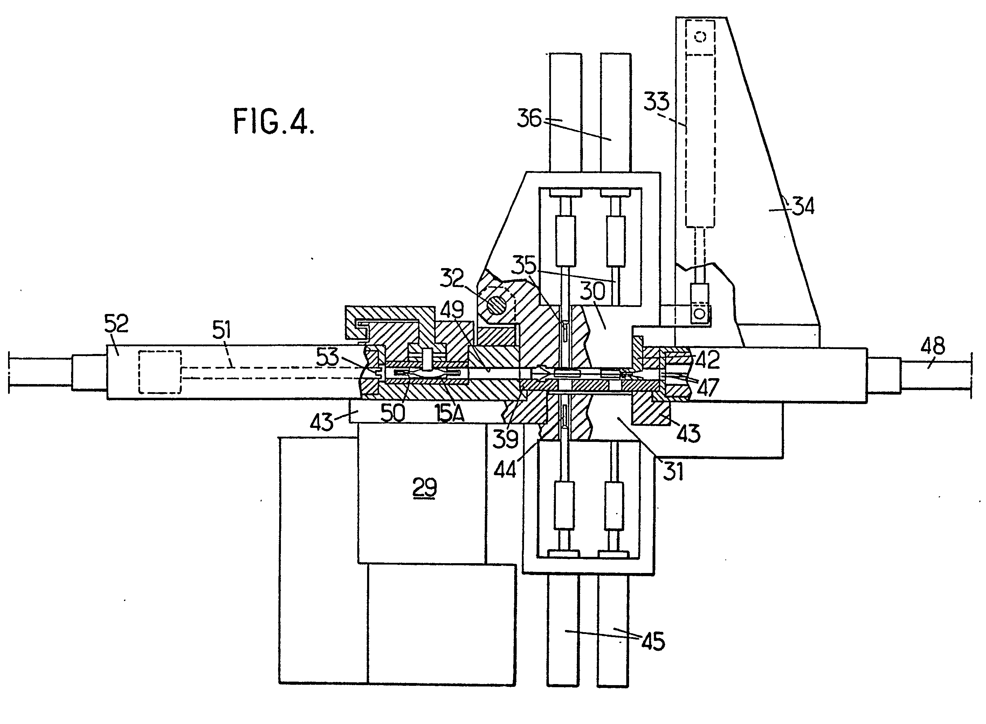

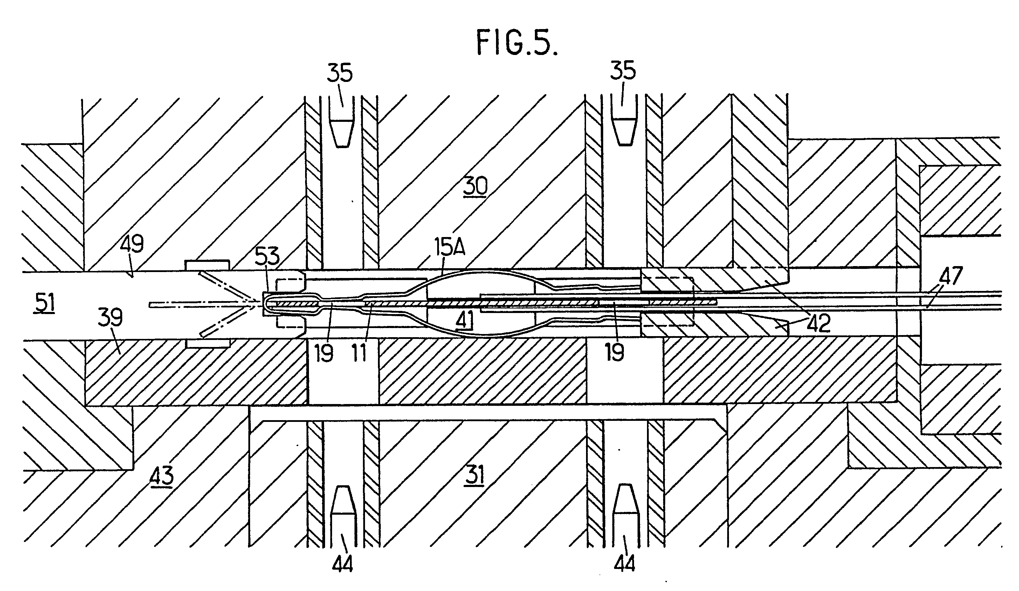

Le dispositif montré en figure 4, dont la fraction qui assure le positionnement précis et le soudage du ressort est montrée en figure 5, est destiné au montage des ressorts 15A. Ce dispositif comporte un bâti 29 dont est solidaire une mâchoire inférieure fixe 31. Une mâchoire supérieure mobile 30 est montée de façon à pouvoir tourner sur un axe 32 solidaire des mâchoires 30 et 31. Un vérin 33 de manoeuvre, par exemple pneumatique, est monté entre une console 34 solidaire de la mâchoire inférieure fixe 31 et la mâchoire supérieure mobile 30. Ce vérin permet de basculer la mâchoire 30 entre la position de travail dans laquelle elle est montrée en figures 4 et 5 et une position où elle dégage le poste de positionnement et de soudage du ressort, permettant ainsi de mettre en place ou d'enlever une plaquette 11.

La mâchoire inférieure 31 comporte des moyens pour recevoir une plaquette à la fois et la déplacer dans le sens de sa longueur, c'est-à-dire transversalement au plan des figures 4 et 5. Dans le mode de réalisation illustré, ces moyens comprennent un coulisseau 39 comportant des mors profilés 41. La plaquette est fixée par des moyens (non représentés) situés aux extrémités du mors inférieur. Les mors comprennent de plus une butée 42 de ressort, dont le rôle apparaîtra plus loin. Le coulisseau est porté par une glissière 43 liée au bâti à ses deux extrémités par des moyens non représentés. Le bâti porte encore des moyens d'avance du coulisseau par des égaux à l'intervalle qui sépare deux bandes successives de la plaquette 11.

Dans la partie fixe du dispositif est ménagé un couloir 49 de guidage de chaque ressort à son tour, associé à des moyens pour déplacer le ressort le long du couloir vers la plaquette. Dans le mode de réalisation illustré en figure 4, ce couloir est ménagé dans une pièce solidaire du bâti et s'étend entre le poste de positionnement et de soudage et une chambre de réception d'un chargeur 50 dans lequel les ressorts 15A sont empilés, transversalement au plan de la figure. Le chargeur 50 a un profil interne qui épouse la forme des ressorts et il contient un ressort de compression (non représenté) qui repousse la pile de ressorts après chaque extraction d'un ressort de manière à en ramener un autre en face du couloir de guidage 49. Dans une variante de réalisation, l'alimentation en ressorts est effectuée grâce à une disposition en bande des ressorts, liés entre eux par des tenons qui sont cisaillés lors de l'introduction dans le couloir de guidage 49. Les moyens pour déplacer le ressort comportent un vérin 52 à double effet, par exemple pneumatique dont le piston se prolonge par une tige 51 terminée par une échancrure 53 destinée à venir s'appliquer contre la boucle supérieure du ressort 15A à insérer. Lors de la mise en oeuvre du vérin 52 à partir de la position de repos montrée en figure 4, la tige 51 repousse le ressort jusqu'à ce que ses branches viennent en appui contre la butée 42.

Le dispositif montré en figure 4 est destiné non seulement à positionner les ressorts, mais aussi à les souder en place. Dans ce but, les mâchoires 30 et 31 portent chacune un jeu d'électrodes. La mâchoire supérieure 30 comprend deux électrodes 35 actionnables chacune par un vérin, par exemple pneumatique 36, permettant de les déplacer entre la position de repos où elles sont illustrées en fig. 4 et une position de travail où les électrodes reposent sur le ressort, face aux fenêtres 19 de la plaquette. De façon symétrique, la mâchoire inférieure 31 est munie de deux électrodes 44 actionnées par des vérins 45. Lorsque les deux jeux de vérins sont actionnés, les deux branches opposées du ressort 15A placé en face sont appliquées l'une contre l'autre à travers les fenêtres 19.

Bien que les moyens de déplacement du ressort guident celui-ci en le maintenant dans une orientation parallèle au plan de la plaquette vers son emplacement d'insertion, à partir d'une des tranches de la plaquette, il subsiste un risque d'accrochage de l'extrémité d'une branche du ressort par la fenêtre 19 la plus éloignée de la tranche d'introduction. Pour écarter ce risque, le dispositif montré en figure 4 comporte des masques 47 mobiles, destinés à recouvrir la fenêtre 19 pendant l'introduction du ressort 15A. Ces masques 47 sont constitués par deux tôles minces déplaçables par un vérin 48, par exemple pneumatique, entre la position rétractée où elles sont montrées en figure 4 et la position avancée où elles sont montrées en figure 5 et où elles recouvrent la fenêtre 19 et se terminent à mi-longueur de la plaquette. L'écartement de ces tôles est fixé par une cale (non représentée) à une valeur légèrement supérieure à l'épaisseur de la plaquette.

Le dispositif est évidemment complété par des moyens d'alimentation des électrodes de soudage en courant et par un mécanisme de commande en séquence des différents éléments, qui sera en général constitué par un automate programmable, bien qu'une commande manuelle par opérateur soit évidemment possible. On peut prévoir un dispositif de mise en vibration de coulisseau 39 afin de faciliter le positionnement du ressort. Dans tous les cas, le fonctionnement sera le suivant au cours de l'équipement d'une plaquette.

La mâchoire supérieure 30 étant soulevée, une plaquette nue 11 est mise en place alors que le coulisseau occupe la position pour laquelle la première bande de la plaquette 11 fait face au couloir 49. La mâchoire supérieure est refermée, les électrodes des deux mâchoires étant dans la position montrée en figures 4 et 5. Les mors portant la plaquette sont alors emprisonnés et ne peuvent plus se déplacer que transversalement au plan de la figure. Si la première bande doit recevoir un ressort 15A, le vérin 48 est d'abord actionné pour amener les masques 47 dans la position montrée en figure 5, puis le vérin 52 est actionné pour amener la tige 41 de la position montrée en figure 4 à la position montrée en figure 5 et insérer un ressort 15A. Les vérins 36 et 45 sont actionnés pour appliquer les électrodes 35 et 44 contre les branches du ressort et les maintenir en position sur la plaquette. La tige 51 et les masques 47 sont rétractés par mise en action des vérins 52 et 48, le retrait des masques s'accompagnant de la venue en contact des deux branches du ressort 15A à travers les fenêtres 19, sous l'action des électrodes. Le soudage est alors effectué, puis les électrodes 35 et 44 sont rétractées. Les moyens de déplacement transversal du coulisseau 39 sont actionnés pour déplacer la plaquette soit d'un pas, soit de plusieurs pas, suivant que l'emplacement suivant de la plaquette est ou n'est pas équipé d'un ressort double, puis la séquence est répétée. Une fois la plaquette complètement équipée, la mâchoire supérieure 30 est ouverte pour permettre d'enlever la plaquette et de la remplacer par une plaquette nue.

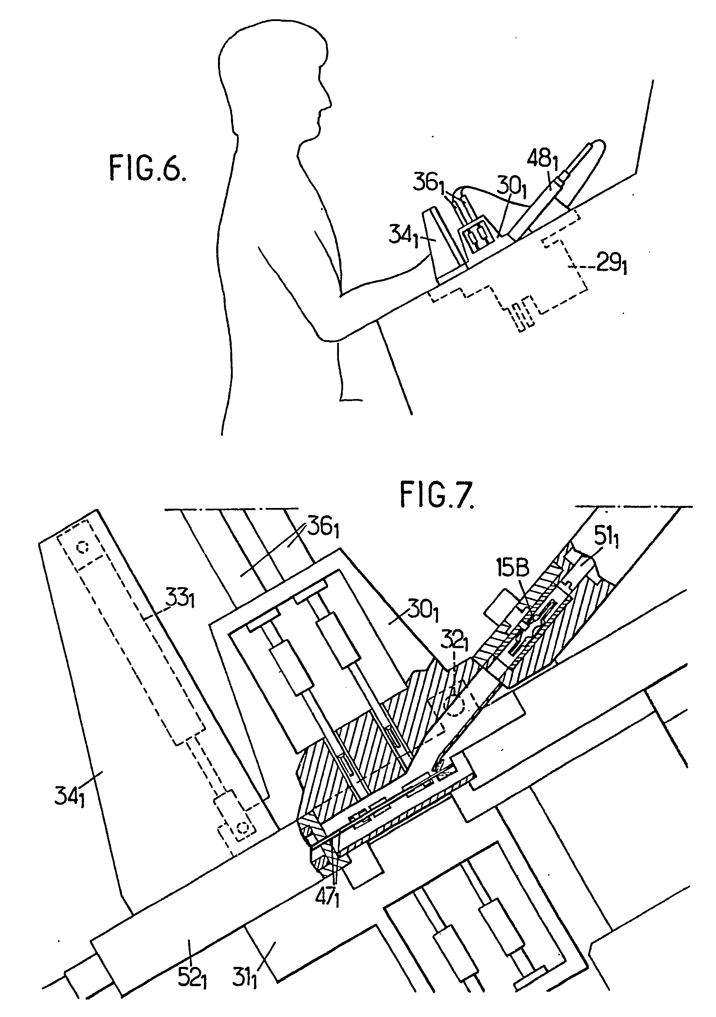

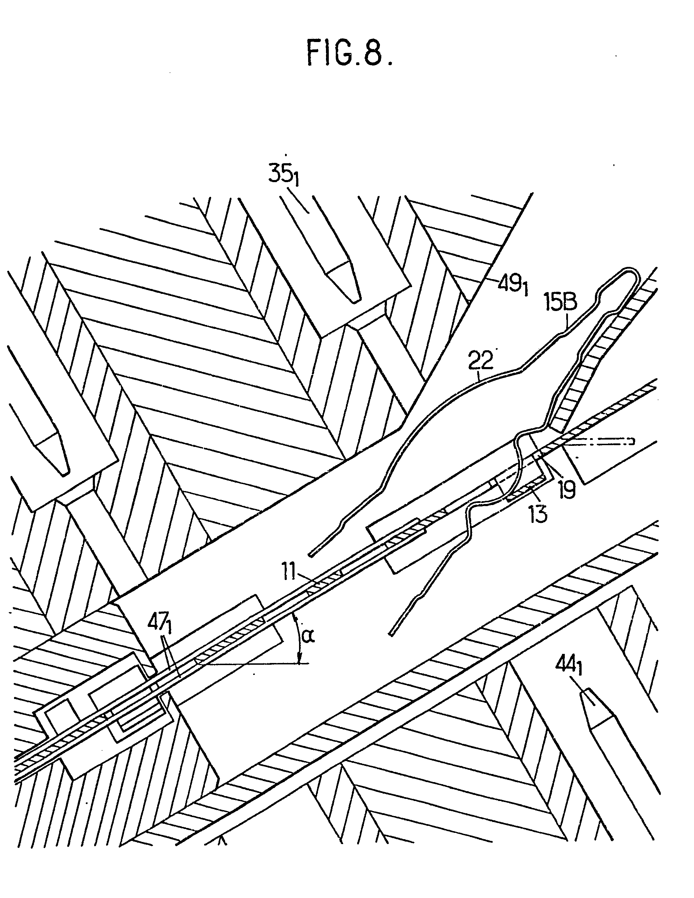

On décrira maintenant, en faisant référence aux figures 6 à 8, un dispositif permettant de mettre en place des ressorts en les introduisant non plus par une tranche terminale de la plaquette, mais par une ouverture de celle-ci. Un tel dispositif est donc notamment utilisable pour mettre en place les ressorts simples 15B sur les plaquettes 11.

Pour cela, il est nécessaire d'introduire le ressort par un couloir qui maintient le ressort dans une orientation qui n'est pas celle du plan de la plaquette, tout en restant proche de cette orientation. De plus, le dispositif est avantageusement placé de façon que les forces de gravité agissant sur le ressort à insérer favorisent son insertion.

Le dispositif des figures 6 à 8 a une constitution générale qui se rapproche de celle déjà décrite en faisant référence aux figures 4 et 5 et les éléments correspondants seront désignés par le même numéro affecté de l'indice 1. Il comprend encore un bâti $29_1$ sur lequel est fixée une mâchoire inférieure $31_1$, portant un axe $32_1$ autour duquel un vérin $33_1$ permet de faire basculer une mâchoire supérieure $30_1$. Mais le bâti est placé de façon que la plaquette à équiper 11 soit maintenue non pas horizontalement, mais avec un angle $\alpha$ qui sera généralement de l'ordre de 30°. De plus, on donne au couloir $49_1$ une inclinaison par rapport au plan de la plaquette, généralement de l'ordre de 20°, et on le place de façon à guider la branche non active du ressort 15B vers la fenêtre d'introduction 19. On voit que le couloir présente une inclinaison totale sur l'horizontale de l'ordre de 50° environ qui permet au ressort de glisser per gravité le long de la plaquette 11 après arrêt de l'action de la tige d'introduction $51_1$ (figure 7). On retrouve, dans le dispositif des figures 6 à 8, des masques $47_1$ et le rôle du masque supérieur est ici particulièrement important du fait du risque accru d'accrochage de la branche supérieure du ressort 15B dans la fenêtre ou les fenêtres les plus éloignées de la zone d'introduction.

Le fonctionnement du dispositif des figures 6 à 8 est très similaire à celui du dispositif des figures 4 et 5: les plaquettes à équiper, éventuellement déjà munies de leur ressort double, sont encore placées dans un coulisseau déplaçable par des moyens non représentés.

Les dispositifs qui viennent d'être décrits peuvent être intégrés à un ensemble de travail comprenant également un dispositif d'approvisionnement constitué par un ensemble de tiroirs de stockage placé à côté du bâti de chaque dispositif et ayant des tiroirs recevant, d'un côté, les plaquettes nues (ou déjà équipées d'un type de ressort) et les chargeurs de ressort pleins et, de l'autre, des tiroirs permettant de stocker les plaquettes équipées avant évacuation. L'automate séquentiel programmable de commande peut être de nature entièrement classique. Il sera généralement prévu pour effectuer toutes les opérations de contrôle requises, éventuellement en complétant le dispositif par des palpeurs non représentés.

## Revendications

1. Procédé d'insertion de ressort (15A, 15B) en épingle à cheveux à deux branches à cheval sur une plaquette (11) munie de fenêtres (19) permettant de souder localement les branches l'une à l'autre, caractérisé en ce qu'on maintient la plaquette dans une position déterminée, en ce qu'on déplace le ressort suivant une orientation proche du plan de la plaquette, vers son emplacement d'insertion, perpendiculairement à la longueur de la plaquette, après avoir recouvert au moins la fenêtre de la plaquette la plus éloignée de la zone par laquelle s'effectue l'introduction du ressort à l'aide d'au moins un masque (47) déplaçable parallèlement au plan de la plaquette afin déviter l'engagement intempestif d'une extrémité d'une branche du ressort dans la fenêtre et en ce qu'on répète l'opération après déplacement de la plaquette dans le sens de la longueur d'un ou de plusieurs pas déterminés.

2. Procédé suivant la revendication 1, caractérisé en ce qu'on applique les branches du ressort l'une contre l'autre à travers lesdites fenêtres à l'aide d'électrodes de soudage déplaçables (35, 44) par vérin après introduction, en ce qu'on dégage alors le ou les masques et en ce qu'on soude électriquement les branches l'une à l'autre.

3. Dispositif d'insertion de ressort en épingle à cheveux (15A, 15B) à deux branches à cheval sur une plaquette munie de fenêtres (19) permettant de souder localement les branches l'une contre l'autre, caractérisé en ce qu'il comporte des moyens pour recevoir une plaquette (11) à la fois et la déplacer dans le sens de la longueur; un couloir (49, $49_1$) de guidage de chaque ressort à son tour, associé à des moyens pour déplacer le ressort le long du couloir vers son emplacement d'insertion, coopérant pour maintenir le ressort dans une orientation proche du plan de la plaquette au cours de son déplacement transversalement à la longueur de la plaquette; et au moins un masque (47, $47_1$) déplaçable parallèlement au plan de la plaquette à partir de la tranche de celle-ci éloignée de la zone par laquelle s'effectue l'introduction permettant de couvrir, d'un côté au moins de la plaquette, la fenêtre (19) la plus éloignée de la zone par laquelle s'effectue l'introduction afin d'éviter l'engagement intempestif d'une extrémité d'une branche du ressort dans cette fenêtre.

4. Dispositif suivant la revendication 3, caractérisé en ce qu'il comprend deux jeux d'électrodes associés à des moyens permettant de les déplacer entre une position rétractée où elles libèrent les moyens de réception de la plaquette et une position avancée où les électrodes sont en appui sur les branches du ressort (15A, 15B) et les pressent l'une contre l'autre à travers les fenêtres (19).

5. Dispositif d'insertion de ressort en épingle à cheveux (15A, 15B) à deux branches à cheval sur une plaquette munie de fenêtres (19) permettant de souder localement les branches l'une contre l'autre, caractérisé en ce qu'il comporte des moyens pour recevoir une plaquette (11) à la fois et la déplacer pas à pas dans le sens de la longueur; un couloir (49, $49_1$) de guidage de chaque ressort à son tour, associé à des moyens (52, $52_1$) pour déplacer le ressort le long du couloir vers son emplacement d'insertion, coopérant pour maintenir le ressort dans une orientation proche du plan de la plaquette au cours de son déplacement transversalement au sens longitudinal de la plaquette; des moyens (47, $47_1$) permettant d'éviter l'accrochage d'une extrémité d'une branche du ressort dans les fenêtres; et des électrodes (35, 44; $35_1$, $44_1$) déplaçables transversalement au plan de la plaquette entre une position rétractée et une position avancée dans laquelle elles pressent les branches du ressort l'une contre l'autre à travers les fenêtres pour permettre le soudage.

6. Dispositif suivant la revendication 3, 4 ou 5, caractérisé en ce qu'il comporte, sur un bâti, une mâchoire fixe (31, $31_1$) et une mâchoire mobile (30, $30_1$) déplaçable l'une par rapport à l'autre entre une position de fermeture où elles emprisonnent les moyens de réception de la plaquette et une position écartée où elles libèrent lesdits moyens et permettent de mettre en place ou d'enlever une plaquette.

7. Dispositif suivant la revendication 6, caractérisé en ce que lesdits moyens de réception d'une plaquette comprennent un coulisseau porté par une glissière de la partie fixe et muni de moyens d'avance pas à pas.

8. Dispositif suivant l'une quelconque des revendications 3 à 7, caractérisé en ce qu'il comprend un chargeur destiné à contenir une pile de ressorts et à présenter les différents ressorts en succession face au couloir (49, 49₁) ou en ce que les ressorts sont présentés en bande.

9. Dispositif suivant l'une quelconque des revendications 3 à 8, caractérisé en ce que le couloir est placé de façon à guider chaque ressort symétriquement par rapport au plan de la plaquette et à l'insérer par la tranche de la plaquette opposée à celle à partir de laquelle s'effectue le déplacement du masque.

10. Dispositif suivant l'une quelconque des revendications 3 à 8, caractérisé en ce que le couloir est en pente et placé de façon à guider le ressort suivant une orientation oblique par rapport au plan de la plaquette, mais proche de ce plan, vers un emplacement provoquant l'introduction d'une branche du ressort dans une ouverture ménagée dans la plaquette.

11. Dispositif suivant la revendication 10, caractérisé en ce que les moyens de réception de la plaquette sont prévus pour donner à celle-ci une pente facilitant l'introduction du ressort.

12. Dispositif suivant la revendication 11, caractérisé en ce que la pente de la plaquette et l'obliquité du couloir par rapport à la plaquette sont telles que le ressort soit introduit sous un angle de 50° environ par rapport à l'horizontale.

## Patentansprüche

1. Verfahren zum Einsetzen von haarnadelförmigen Federn mit zwei beidseitigen Schenkeln an Platten (11) mit Ausschnitten (19), die ein örtliches Aneinanderschweissen der Schenkel gestatten, dadurch gekennzeichnet, dass man die Platte in einer gegebenen Stellung hält, dass man die Feder längs einer der Ebene der Platte nahekommenden Ebene zu ihrem Einsetzort senkrecht zur Längsrichtung der Platte verschiebt, nachdem wenigstens der Ausschnitt der Platte, der von der Zone, durch die das Einführen der Feder erfolgt, mittels wenigstens einer parallel zur Ebene der Platte verschiebbaren Abdeckung abgedeckt wurde, um einen ungewollten Eingriff eines Endes des einen Schenkels der Feder in den Ausschnitt zu vermeiden, und dass man den Vorgang nach der Verschiebung der Platte in Längsrichtung um einen oder mehrere gegebene Schritte wiederholt.

2. Verfahren nach Anspruch 1, dadurch gekennzeichnet, dass man die Schenkel der Feder durch die Ausschnitte hindurch nach dem Einführen durch Stellzylinder mittels verschiebbarer Schweisselektroden aneinanderdrückt, dass man dann die Abdeckung oder die Abdeckungen abnimmt und dass man die Schenkel elektrisch aneinanderschweisst.

3. Vorrichtung zum Einsetzen von haarnadelförmigen Federn mit zwei beidseitigen Schenkeln an Platten (11) mit Ausschnitten (19), die ein örtliches Aneinanderschweissen der Schenkel gestatten, durch Mittel zur Aufnahme einer Platte (11), auf einmal und zu deren Verschiebung in Längsrichtung, durch einen Führungskanal für jede Feder in Verbindung mit Mitteln, die zum Verschieben der Feder längs des Kanals zu ihrem Einsetzort dienen und zum Halten der Feder in einer Ausrichtung in der Nähe der Ebene der Platte während ihrer Verschiebung quer zur Längsrichtung der Platte zusammenarbeiten, und durch wenigstens eine Abdeckung (47, 47₁), die parallel zur Ebene der Platte verschiebbar ist ausgehend von deren Rand, der von der Zone entfernt ist, durch die das Einführen erfolgt, und die auf wenigstens einer Seite der Platte das Abdecken des Ausschnitts (19) gestattet, der von der Zone am weitesten entfernt ist, durch die das Einführen erfolgt, um das ungewollte Eingreifen eines Endes eines Schenkels der Feder in diesem Ausschnitt zu vermeiden.

4. Vorrichtung nach Anspruch 3, gekennzeichnet durch zwei Sätze von Elektroden mit Mitteln zu deren Verschiebung zwischen einer zurückgezogenen Stellung, in der sie die Aufnahmemittel der Platte freigeben, und einer vorgeschobenen Stellung, in der die Elektroden an den Schenkeln der Feder (15A, 15B) anliegen und sie durch die Ausschnitte (19) hindurch aneinanderdrücken.

5. Vorrichtung zum Einsetzen von haarnadelförmigen Federn mit zwei beidseitigen Schenkeln an Platten (11) mit Ausschnitten (19), die ein örtliches Aneianderschweissen der Schenkel gestatten, gekennzeichnet durch Mittel zur Aufnahme einer Platte (11) auf einmal und zu deren schrittweisen Verschiebung in Längsrichtung, durch einen Führungskanal für jede Feder in Verbindung mit Mitteln, die zum Verschieben der Feder längs des Kanals zu ihrem Einsetzort dienen und zum Halten der Feder in einer Ausrichtung in der Nähe der Ebene der Platte während ihrer Verschiebung quer zur Längsrichtung der Platte zusammenarbeiten, durch Mittel (47, 47₁) zur Vermeidung des Einhängens eines Endes eines Schenkels der Feder in den Ausschnitten, und durch Elektroden (35, 44; 35₁, 44₁), die quer zur Ebene der Platte zwischen einer zurückgezogenen Stellung und einer vorgeschobenen Stellung verschiebbar sind, in der sie die Schenkel der Feder durch die Fenster hindurch aneinanderdrücken, um deren Schweissen zu ermöglichen.

6. Vorrichtung nach Anspruch 3, 4 oder 5, dadurch gekennzeichnet, dass sie auf einem Gestell eine feststehende Backe (31, 31₁) und eine bewegliche Backe (30, 30₁) aufweist, die gegeneinander verschiebbar sind zwischen einer Schliessstellung, in der sie die Aufnahmemittel der Platte umschliessen, und einer Spreizstellung, in der sie diese Mittel freigeben und das Einsetzen oder Entnehmen einer Platte gestatten.

7. Vorrichtung nach Anspruch 6, dadurch gekennzeichnet, dass die Mittel zur Aufnahme einer Platte einen Schieber aufweisen, der von einer Gleitführung des feststehenden Teils getragen und mit Mitteln zum schrittweisen Vorschieben versehen ist.

8. Vorrichtung nach einem der Ansprüche 3 bis 7, gekennzeichnet durch eine Beladevorrichtung, die einen Stapel von Federn aufnimmt und die verschiedene Federn dem Kanal (49, 49₁) aufeinanderfolgend zuführt, wobei alternativ die Federn in Bandform zugeführt werden.

9. Vorrichtung nach einem der Ansprüche 3 bis 8, dadurch gekennzeichnet, dass der Kanal so angeordnet ist, dass er jede Feder symmetrisch zur Ebene der Platte führt und sie durch den Rand der Platte einsetzt, der demjenigen gegenüberliegt, von dem aus die Verschiebung der Abdeckung erfolgt.

10. Vorrichtung nach einem der Ansprüche 3 bis 8, dadurch gekennzeichnet, dass der Kanal geneigt und derart angeordnet ist, dass die Feder in einer gegenüber der Platte geneigten, jedoch dieser Ebene nahegelegenen Ausrichtung zu einem Ort geführt wird, der das Einführen eines Schenkels der Feder in eine in der Platte ausgebildete Öffnung bewirkt.

11. Vorrichtung nach Anspruch 10, dadurch gekennzeichnet, dass die Mittel zur Aufnahme der Platte vorgesehen sind, um dieser eine Neigung zu geben, die das Einführen der Feder erleichtert.

12. Vorrichtung nach Anspruch 11, dadurch gekennzeichnet, dass die Neigung der Platte und die Schräglage des Kanals gegenüber der Platte so gross sind, dass die Feder unter einem Winkel von ungefähr 50° gegenüber der Waagerechten eingeführt wird.

**Claims**

1. Process for inserting hair-pin springs (15A, 15B) having two legs over the edge of a plate (11) formed with windows (19) which makes it possible to locally weld the legs to each other, characterized by the steps of holding the plate in a predetermined position, moving the spring along a direction close to the plane of the plate toward its insertion position, perpendicularly to the length of the plate after that window of the plate which is most remote from the zone through which the spring is introduced has been covered with at least one mask (47) movable parallel to the plane of the plate for avoiding accidental engagement of an end of a spring leg in the window and repeating said operation after the plate has been moved in the direction of the length by one or a plurality of predetermined steps.

2. Process according to claim 1, characterized in that the legs of the springs are applied against each other through said window by means of welding electrodes (35, 44) which can be moved by a jack, after introduction, in that the mask or masks are then removed, and in that the legs are mutually welded electrically.

3. Device for inserting hair-pin springs (15A, 15B) having two legs over the edge of a plate formed with windows (19) arranged for authorizing local welding of the legs to each other, characterized in that it comprises means for receiving one plate (11) at a time and moving it along the direction of the length of the plate; a corridor (49, $49_1$) for guiding each spring in turn, associated with means for moving the spring along the corridor toward its insertion position, co-operating for maintaining the spring in an angular position close to the plane of the plate during its movement transverse to the length of the plate; and at least one mask (47, $47_1$) movable parallel to the plane of the plate from the edge of the latter which is remote from the zone through which the spring is introduced, arranged to cover, on one side at least of the plate, that window (19) which is most remote from the zone through which the spring is introduced for avoiding accidental engagement of an end of a spring leg in that window.

4. Device according to claim 3, characterized in that it comprises two sets of electrodes associated with means for moving them between a retracted position in which they are clear from said plate receiving means and an advanced position in which the electrodes bear against the legs of the spring (15A, 15B) and press them against each other through the windows (19).

5. Device for inserting hair-pin springs (15A, 15B) having two legs over the edge of a plate formed with windows (19) arranged for authorizing local welding of the legs to each other, characterized in that it comprises means for receiving one plate (11) at a time and moving it along the direction of the length of the plate; a corridor (49, $49_1$) for guiding each spring in turn, associated with means (52, $52_1$) for moving the spring along the corridor toward its insertion position, co-operating for maintaining the spring in an angular position close to the plane of the plate during its movement transverse to the length of the plate; means (47, $47_1$) for preventing an end of a leg of the spring from catching in the windows; and electrodes (35, 44; $35_1$, $44_1$) movable transversely to the plane of the plate between a retracted position and an advanced position in which they press the legs of the spring against each other through the windows for welding.

6. Device according to claim 3, 4 or 5, characterized in that it comprises, on a frame, a stationary jaw (31, $31_1$) and a jaw (30, $30_1$) movable with respect to the fixed jaw between a closed position in which they retain the plate transport means against movement and a spaced apart position in which they release said means and allow one of said plates to be inserted or removed.

7. Device according to claim 6, characterized in that said transport means comprise a slider supported by a slide carried by said fixed part and having step by step advancing means.

8. Device according to any one of claims 3-7, characterized in that it comprises a loader for containing a stack of springs and presenting the springs in succession to the corridor (49, $49_1$) or in that the springs are assembled as a strip.

9. Device according to any one of claims 3-8, characterized in that the corridor is placed so as to guide each spring symmetrically with respect to the plane of the plate and to insert it across the edge of the plate opposite that from which the movement of the mask takes place.

10. Device according to any one of claims 3-8, characterized in that the corridor has a slope and is placed so as to guide the spring at a slight obliquity with respect to the plane of the plate towards a position causing the introduction of a leg of the spring into an opening formed in the plate.

11. Device according to claim 10, characterized in that the means for receiving the plate are formed to give to the plate a slope facilitating introduction of the spring.

12. Device according to claim 11, characterized in that the slope of the plate and the skew of the corridor with respect to the plate are such that the spring is introduced at an angle of about 50° with respect to the horizontal.

# FIG.1.

# FIG.3A.

# FIG.3B.

# FIG.2.

FIG.4.

0 108 673

# FIG.5.

# FIG.6.

# FIG.7.

# FIG.8.